# EUROPÄISCHE PATENTANMELDUNG

(11) **EP 4 585 666 A1**
(43) Veröffentlichungstag der Anmeldung: **16.07.2025**
(21) Anmeldenummer: 25150517.8
(22) Anmeldetag: 07.01.2025
(51) Int. Cl.: C09K 17/40, C08J 5/00, C08J 99/00

(54) **VERBUNDWERKSTOFF**

(30) Priorität: 05.01.2024 DE 102024100273
(71) Anmelder: Müller, Marc, 58513 Lüdenscheid (DE)
(72) Erfinder: Müller, Marc, 58513 Lüdenscheid (DE)
(74) Vertreter: Patentanwälte Dörner & Kötter PartG mbB

(57) **Zusammenfassung**

Die Erfindung betrifft einen Verbundwerkstoff auf Kunststoffbasis mit eingelagerten Steinpartikeln. Die Steinpartikel sind Grauwackepartikel und der Mengenanteil der Grauwackepartikel beträgt höchstens 72 Gewichts%. Die Erfindung betrifft außerdem ein Verfahren zur Herstellung eines Verbundwerkstoffs sowie ein Produkt, hergestellt aus einem Verbundwerkstoff.

## Beschreibung

Die Erfindung betrifft einen Verbundwerkstoff auf Kunststoffbasis mit eingelagerten Steinpartikeln. Die Erfindung betrifft außerdem ein Verfahren zur Herstellung eines Verbundwerkstoffs

Produkte aus Kunststoff sind sehr weit verbreitet. Sie finden in allen Bereichen des Lebens Anwendung. Der Vorteil von Produkten aus Kunststoff besteht zum einen in ihrer ausgezeichneten Eigenschaft in Bezug auf die Formgebung. Zum anderen unterliegen Produkte aus Kunststoff keiner Korrosion und haben bei hoher Stabilität ein geringes Gewicht.

Für Produkte aus Kunststoff finden überwiegend Kunststoffe aus synthetischen Polymeren Anwendung. Die Herstellung synthetischer Polymere verläuft über drei verschiedene Reaktionen, nämlich Polymerisation, Polyaddition oder Polykondensation von Monomeren zu einem synthetischen Polymer.

Für die Produktion der Teile wird Kunststoff in Form von Granulat verwendet. Die in einem Extruder vorliegende Schmelze wird über Düsen zu Strängen geformt und in Luft oder Wasser abgekühlt. Anschließend schneidet ein rotierendes Messer die Stränge in wenige Millimeter lange Abschnitte, das sog. Granulat.

Außerdem sind aus nachwachsenden Rohrstoffen gewonnene natürliche Polymere bekannt, die zur Herstellung von Produkten aus Kunststoff Anwendung finden. Sie zeichnen sich durch eine ökologisch neutrale CO₂-Bilanz aus, was bedeutet, dass bei Verbrennung oder Kompostierung der natürlichen Polymere der Atmosphäre nicht mehr CO₂ zugeführt wird, als ihr beim Wachstum der Rohstoffe entzogen wurde.

Des Weiteren gewinnen insbesondere abbaubare biologisch bzw. kompostierbare natürliche Polymere zunehmend an Bedeutung, da diese im Vergleich mit den meisten synthetischen Polymeren in einem wesentlich kürzeren Zeitraum und in der Regel rückstandslos abgebaut werden. Auch diesen Kunststoffen können Fasern beigemischt werden, um ihre Eigenschaften zu beeinflussen.

Sowohl bei der Verwendung von synthetischen als auch bei natürlichen Polymeren erfolgt die Verarbeitung des Granulats überwiegend durch Spritzgießen. Beim Spritzgießen können in einem einzigen Arbeitsschritt fertig geformte Teile komplexer Geometrie und nahezu beliebiger Größe hergestellt werden. Dabei funktioniert die Spritzgussmaschine nach folgendem Prinzip: Kunststoffgranulat wird über einen Trichter einer Schnecke zugeführt. Das Granulat wird durch diese Schnecke gefördert und gleichzeitig durch Erwärmung geschmolzen. Anschließend wird der plastifizierte Kunststoff durch die Schnecke verdichtet und unter hohem Druck durch eine Düse in ein Spritzgusswerkzeug gespritzt. Durch anschließende Kühlung des Werkzeugs wird der Kunststoff wieder zum Erstarren gebracht und das fertige Spritzgussteil kann dem Spritzgusswerkzeug entnommen werden.

Verbundwerkstoffe auf Kunststoffbasis werden auch als Mehrkomponenten-Werkstoffe oder Composites bezeichnet. Bei der Verwendung solcher Mehrkomponenten-Werkstoffe bzw. Composites erfolgt zunächst in einem vorgelagerten Arbeitsschritt die Anmischung des Werkstoffs. Hierbei werden die einzelnen Komponenten einem Mischer zugeführt, der diese zu einem homogenen Gemisch vermengt (sog. Compoundierung). Der so erzielte Werkstoff wird anschließend einer Spritzgießmaschine oder einem formgebenden Extruder zur Herstellung von Rohren, Profilen, Platten, Folien o.dgl. zugeführt.

Verbundwerkstoffe sind in den verschiedensten Varianten bekannt. Den Kunststoffen werden hierzu Fasern oder Partikel beigemischt. Die Beimischung dient der Verbesserung der Werkstoffeigenschaften und der Öko-Bilanz.

Aus der WO 2016/120285 A1 ist es bspw. bekannt, dem Kunststoffgranulat speziell zubereitete Sonnenblumenschalenfasern beizumischen. Durch die Beimengung von Sonnenblumenschalenfasern soll die Schwindung, welche Kunststoffprodukte während des Abkühlens unterliegen, reduziert werden.

Darüber hinaus ist es bekannt, dem Kunststoffmaterial Naturfasern beizumischen. Bei den Naturfasern kann es sich um Holzfasern, Bastfasern oder Naturfasern aus Grünschnitt handeln. Auch kann faserhaltige Biomasse dem Kunststoffmaterial beigemischt werden (vgl. WO 2012/104041 A1). Hierdurch soll ein erhöhtes Zug-E-Modul erzielbar sein.

Des Weiteren sind Kunststoffe bekannt (vgl. EP 1 381 640 B1), denen zur Verbesserung der elektrischen Leitfähigkeit Bestandteile von Ruß, Graphit und/oder Metallpulver beigegeben werden. Bei dem Metall kann es sich bspw. um Niob oder Niob-Verbindungen handeln (vgl. DE 37 24 396 A1).

Aus der DE 10 2009 000 641 A1 ist ein Verfahren bekannt, mit dem Flächengebilde zur Beschichtung eines Untergrunds gebildet werden können, welche antistatische Eigenschaften haben. Hierzu kommen ionische Flüssigkeiten oder Lösungen von Metallsalzen in ionischen Flüssigkeiten zur Anwendung. Ein als Kunststein ausgebildetes Flächengebilde kann unter anderem Gesteinsbruchstücke enthalten.

Verbundwerkstoffe aus Kunststoff mit darin dispergierten oder eingelagerten Anteilen weiterer Werkstoffe - wie Oxiden, Karbiden, Ferriten od. dgl. - sind bekannt. So werden etwa in der Elektronik für Antennenstäbe Ferrite verwendet, die mit einem Kunststoff gebunden sind, um die Elastizität des Kunststoffes zur Steigerung der Bruchsicherheit zu nutzen.

Ein weiterer Bereich, in welchem Kunststoffe mit eingelagerten metallischen oder oxidischen Werkstoffen eingesetzt werden, ist die Automobil- und Flugzeugindustrie; dort werden die Verbundwerkstoffe in der Hauptsache zur Gewichtseinsparung oder zur Beseitigung von Verschleißproblemen angewendet.

Zudem werden Kunststoffe auch als Binder für Magnetwerkstoffe bei verschiedenen industriellen Anwendungen zum Herstellen von biegsamen oder elastischen Teilen bzw. beim Bau von Magnetschaltern verwendet. Auch zur Steuerung von Vorgängen, die keiner oder nur geringer Temperaturbelastung unterliegen, über die Magnetkraft werden Magnete mit einem Kunststoff als Binder verwendet.

Der vorliegenden Erfindung liegt ein anderes Problem zugrunde. Die bekannten Verbundwerkstoffe auf Kunststoffbasis lassen sich zum einen sehr schwer recyceln, weil die Trennung der den Verbund bildenden Materialien sehr aufwändig ist. Darüber hinaus scheidet bei der Beimischung von bspw. Metallen oder Kohlefasern ein Verrotten aus, wodurch die Öko-Bilanz solcher Bauteile schlecht ist. Zudem müssen die dem Kunststoff beizumischenden Materialien oft mit relativ hohem Aufwand hergestellt bzw. bearbeitet werden.

Vor diesem Hintergrund liegt der Erfindung die Aufgabe zugrunde, einen Verbundwerkstoff auf Kunststoffbasis zu schaffen, der es ermöglicht, auch komplexe Produkte herzustellen, bei denen sich im Falle des Recyclings die den Verbund bildenden Werkstoffe einfacher trennen lassen und die die Möglichkeit des Verrottens eröffnen. Gemäß der Erfindung wird diese Aufgabe mit den Merkmalen des Patentanspruchs 1 gelöst.

Mit der Erfindung ist ein Verbundwerkstoff auf Kunststoffbasis geschaffen, mit dem auch komplexe Produkte herstellbar sind, die sich im Falle des Recyclings einfacher in die den Verbund bildenden Werkstoffe trennen lassen und die die Möglichkeit des Verrottens eröffnen. Durch die Beimischung der Partikel aus natürlich vorkommenden Bestandteilen in Form von Grauwackepartikeln ist die Öko-Bilanz für aus dem erfindungsgemäßen Verbundwerkstoff hergestellten Produkten im Verhältnis zu denselben, aus reinem Kunststoff oder aus Verbundwerkstoffen bspw. mit Kohlefasern hergestellten Produkten deutlich verbessert. Gleichzeitig trägt die Verwendung von Grauwackepartikeln zur Müllreduzierung bei, da Grauwacke-Steinmehl ein Abfallprodukt darstellt, welches u.a. bei der Schotter- oder Split-Produktion anfällt. Zurzeit wird dieses Grauwacke-Steinmehl fast ausschließlich auf Halden gelagert. Mit der Erfindung kann es einer sinnvollen Verwendung zugeführt werden. Zudem ist eine Behandlung der Grauwackepartikel in der Regel nicht erforderlich.

Vorteilhaft weisen die Grauwackepartikeln eine Korngröße von bis zu 1 mm auf. Diese Korngröße ermöglicht in ausgezeichneter Weise ein Heraussieben der Grauwackepartikel im Falle eines Recyclings des aus dem erfindungsgemäßen Verbundwerkstoff hergestellten Produkts.

In Weiterbildung der Erfindung ist der Kunststoff ein biologischer Kunststoff. Hierdurch lässt sich Müll vermeiden, da Produkte, die aus biologischem Kunststoff unter Beimischung von Grauwackepartikeln hergestellt sind, vollständig biologisch abbaubar sind. Zudem ist das Grauwackemehl ein Naturprodukt, welches für Mensch, Tier und Umwelt unschädlich ist. Dadurch sind die Produkte in der Lage zu verrotten, was bspw. bei Offshore-Anwendungen einen erheblichen Beitrag zum Umweltschutz darstellt, weil dort unter anderem Schutzkappen für Verschraubungen bei Windkraftanlagen verbaut werden. Wenn diese bspw. bei Wartungsarbeiten ins Meer fallen wird der biologische Kunststoffanteil der Kappen aus dem erfindungsgemäßen Verbundwerkstoff im Gegensatz zu aus anderen Materialien hergestellte Kappen vollständig verrotten.

Andere Weiterbildungen und Ausgestaltungen der Erfindung sind in den übrigen Unteransprüchen angegeben. Ein Ausführungsbeispiel der Erfindung wird nachfolgend im Einzelnen beschrieben.

Der erfindungsgemäße Verbundwerkstoff besteht aus Kunststoff, in den Steinpartikel aus Grauwacke eingelagert sind. Bei dem Kunststoff kann es sich um jeden handelsüblichen Kunststoff handeln. Somit kann der Kunststoff aus natürlichen, halbsynthetischen oder synthetischen Polymeren bestehen. Der Kunststoff kann ein biologischer Kunststoff sein. Unter biologischem Kunststoff im Sinne der vorliegenden Erfindung sind sowohl biobasierte Kunststoffe, die auf Basis nachwachsender Rohstoffe erzeugt werden, als auch biologisch abbaubare Kunststoffe zu verstehen.

Es kann sich erfindungsgemäß auch um einen thermoplastischen Kunststoff aus der Gruppe der Polyolefine handeln, bspw. Polypropylen oder Polyethylen. Polypropylen eignet sich nach ersten Untersuchungen besonders gut, da es sehr aufnahmefähig ist und zu den am häufigsten verwendeten Standardkunststoffen gehört. Aber auch bei der Verwendung von Acrylnitril-Butadien-Styrol, Polyamid, Polyvinylchlorid, Polycarbonat, Polyetheretherketon, Polyethylenterephthalat, Polylactide oder Polystyrol wurden sehr gute Ergebnisse erzielt. Selbstverständlich können weitere Kunststofftypen (wie Konstruktions-Kunststoffe sowie Hochtemperatur-Kunststoffe) bei gezielter Anpassung ebenfalls gewählt werden. Auch die Verwendung eines Kunststoffs aus einer Mischung aus verschiedenen Thermoplasten, wie bspw. Polypropylen und Acrylnitril-Butadien-Styrol ist möglich.

Die Steinpartikel sind Grauwackepartikel. Grauwacke ist eine Gesteinsart aus der Gruppe der Sandsteine. Grauwacke besteht aus 28 bis 53% Quarz, 25 bis 47% Feldspat, 4 bis 21% Glimmer, 4 bis 25% Chlorit, 0 bis 6% Karbonaten und 1 bis 3% akzessorischen Mineralen.

Es kommen Grauwackepartikel zum Einsatz, deren Korngröße zwar variieren kann, die aber sehr gering ist. Vorzugsweise beträgt die Korngröße 1/1.000 mm. Aber auch die Verwendung von Grauwackepartikeln mit einer Korngröße von bis zu 1 mm ist möglich. Die genannten Korngrößen liegen zu 95% als Abfallprodukt aus der o.g. Verarbeitung von Grauwacke vor. In Folge dessen entfällt eine vorherige Behandlung der Grauwackepartikel fast vollständig. Die Verwendung der genannten Korngrößen ist möglich, ohne dass die weiterverarbeitenden Maschinen (bspw. Spritzgießmaschinen) einen Schaden nehmen würden oder stärker verschleißen würden; die Benutzung von bereits vorhandenen Maschinen und Werkzeugen zur Verarbeitung von Kunststoffen ist problemlos möglich. Die Steinpartikel haben eine mehlartige Konsistenz. Soweit eine Behandlung zum Erreichen der gewünschten Korngröße erforderlich sein sollte, erfolgt diese Behandlung durch Mahlen, vorzugsweise in einer Kugelmühle oder Sieben. Im Ergebnis erhält man so ein sog. Steinmehl.

Der Mengenanteil der Steinpartikel beträgt zwischen 1 Gewichts% bis 72 Gewichts%. Je höher der Anteil an Steinpartikeln in dem Verbundwerkstoff ist, desto höher ist das Gewicht des aus dem Verbundwerkstoff hergestellten Produkts.

Dem Kunststoff und den Grauwackepartikeln kann ein Haftvermittler beigemischt werden. Solche Haftvermittler, auch Additive genannt, tragen dazu bei, die Homogenisierung des Verbundwerkstoffs zu verbessern und einen höheren Füllgrad zu erreichen. Es können sowohl Haftvermittlersysteme aus benetzungsaktiven Haftvermittlern als auch chemisch reaktiven Haftvermittlern zum Einsatz kommen. Auch Additive wie z.B. UV-Stabilisatoren, Weichmacher, Flammschutzmittel, Antioxidantien, Emulgatoren, Pigmente, Farbstoffe, Polymerkettenverlängerer usw. können beigefügt werden.

Versuche mit Hilfe eines Doppelschneckenextruders haben gezeigt, dass der Füllstoff aus Grauwackepartikeln bzw. Steinmehl und das gewählte Polypropylen gut miteinander verschmelzen und ohne Zugabe von Additiven / Haftvermittlern oder ähnliches ein Füllgrad von 70 Gewichts% Steinmehl erzielt werden konnte. Auch ohne Haftvermittler verbindet sich das Steinmehl aus Grauwacke formschlüssig mit der Kunststoffmatrix, so dass auch bei hohen Füllgraden keine Haftvermittler notwendig sind.

Das hat sich insbesondere bei der Verarbeitung einer Mischung aus Polypropylen und Acrylnitril-Butadien-Styrol gezeigt. Polypropylen ist bekanntermaßen üblicherweise zum Mischen mit anderen thermoplastischen Kunststoffen nicht sonderlich gut geeignet, da es sehr schlecht aufnahmefähig für Moleküle anderer Kunststoffe ist. Zudem weist Polypropylen eine niederenergetische Beschaffenheit auf und geht daher nur schwer Wechselwirkungen mit anderen Stoffen ein. Es hat sich aber gezeigt, dass Gemische aus Polypropylen und Acrylnitril-Butadien-Styrol keine Haftvermittler benötigen, wenn dem Gemisch erfindungsgemäß Grauwackepartikel bzw. Grauwackemehl beigemischt wird. Es sind dann keine Haftvermittler erforderlich, da die Grauwackepartikel bzw. das Grauwackemehl als Haftvermittler fungiert und sich kraftschlüssig mit dem Kunststoffgemisch verbindet. Besonders gute Ergebnisse konnten hier bei einem Füllgrad von 50 bis 60 Gewichts% Grauwacke erzielt werden. Neben der Funktion als Haftvermittler führt die Beimischung von Grauwackepartikeln bzw. Grauwackemehl zu einer Verbesserung der mechanischen Eigenschaften des Verbundwerkstoffs.

Ein weiterer Vorteil ergibt sich aus der Verkürzung von Arbeitsschritten im Bereich des Kunststoffrecyclings. Der Inhalt von Sammelbehältern für Verpackungen aus Kunststoff oder Verbundverpackungen (in Deutschland unter der Bezeichnung "Gelber Sack" oder "Gelbe Tonne" bekannt) kann nahezu vollständig als Kunststoffmischung dem Grauwackemehl beigefügt und so recycelt werden. Aufwändiges Sortieren entfällt größtenteils, die Müllmenge wird reduziert.

Auch können sog. "Wegwerfprodukte" hergestellt und genutzt werden, ohne die aktuelle Problematik der Umweltverschmutzung.

Durch die Zugabe von Haftvermittlern (Additiven) können noch höhere Füllgrade erreicht werden. Je nach Aufgabengebiet könnte dieser ebenfalls ein Vorteil sein bzw. zum Einsparen von Kunststoffanteilen beitragen oder zur Verbesserung der Compoundeigenschaften.

Mit dem erfindungsgemäßen Verbundwerkstoff ist eine Vielzahl von Produkten herstellbar, bspw. Halbzeuge / Eisenbahnschwellen aus Rezyklat mit Grauwackepartikeln anstatt Bausand als Füll- und Verstärkungsstoff / 3D Druck Filamente / Kühlkörper / Schutzkappen für Verschraubungen / Fensterrahmen / Kinderspielzeug / Dachziegel / Lichtschalter / Kabelkanäle / Terrassendielen / wärmeleitfähige Kontaktkörper / Schalldämmprodukte / Abstandhalter u.v.a. Durch die hohe Dichte des Grauwackemehls ergibt sich für die aus dem Verbundwerkstoff hergestellten Produkte eine bessere Wertigkeit und Haptik für den Endbenutzer. Außerdem zeichnen sich solche Produkte durch ihre Langlebigkeit aus.

Darüber hinaus ist der erfindungsgemäße Verbundwerkstoff deutlich torsionssteifer als bekannte Verbundwerkstoffe. Zudem ist das Elastizitätsmodul erhöht, wodurch die Festigkeit der aus dem Verbundwerkstoff hergestellten Bauteile erhöht ist. Das wiederum ermöglicht bspw. eine Reduzierung der Wandstärken der jeweiligen Bauteile. Das Elastizitätsmodul kann weiter durch die Beimischung von Glasfasern zu dem erfindungsgemäßen Verbundwerkstoff erhöht werden. Auch die Kerbschlagzähigkeit ist durch die Zugabe des Grauwacke-Steinmehls in Abhängigkeit des Anteils an Grauwacke stark reduziert. Je höher der Grauwackeanteil ist, desto geringer ist die Kerbschlagzähigkeit.

Weiterhin weisen Produkte, die aus dem erfindungsgemäßen Verbundwerkstoff hergestellt sind, ein gehemmtes Brandverhalten auf, weil Grauwacke nicht brennbar ist. Er ermöglicht in Verbindung mit geeigneten Hochleistungs-Kunststoffen auch die Anwendung in thermisch sehr hoch belasteten Bereichen. Als Kunststoffe für einen solchen Einsatz kommen bspw. Polyetheretherketon oder Polyoxymethylen in Betracht. Auch ist der Verbundwerkstoff widerstandsfähig gegenüber Säuren und Basen, was den Einsatz in aggressiven Umgebungen ermöglicht. Darüber hinaus bewirkt der Verbundwerkstoff eine höhere Schwingungsdämpfung.

Die Beimischung von Grauwackepartikeln verbessert auch die Hitze-, Kälte- und UV-Beständigkeit. Des Weiteren sind die Grauwackepartikel witterungsbeständig.

Außerdem kühlt der erfindungsgemäße Verbundwerkstoff deutlich schneller ab als bekannte Werkstoffe. Das hat insbesondere bei Anwendungen mit hohen Schussgeschwindigkeiten erhebliche Vorteile. Gleichzeitig weist der Verbundwerkstoff eine hohe Wärmespeicherfähigkeit auf. Des Weiteren schrumpft und schwindet der erfindungsgemäße Verbundwerkstoff weniger als bekannte Kunststoffe. Dadurch lassen sich Bauteile aus dem erfindungsgemäßen Verbundwerkstoff deutlich besser entformen. Durch die verbesserte Wärmeleitfähigkeit friert der Verbundwerkstoff an der Wand des Werkzeugs schneller ein und der Kern kühlt schneller ab. Dadurch kann ein Bauteil in etwa doppelt so schnell entformt werden. Ein Verzug des Bauteils wurde dennoch nicht festgestellt.

Mit dem erfindungsgemäßen Verbundwerkstoff lässt sich außerdem die Fließfähigkeit im Verhältnis zu bekannten Kunststoffen erhöhen, und zwar bereits bei einer teilweisen Verdopplung des definierten Kunststoffes. Hier steht die Geschwindigkeit in Kombination mit dem niedrigen Energieverbrauch im Mittelpunkt. Die Ergebnisse zeigen eine Verdopplung der Fließfähigkeit schon bei einem Anteil von 10 Gewichts% Grauwacke.

Der erfindungsgemäße Verbundwerkstoff weist zudem den Vorteil auf, dass er im Falle der Verwendung von abbaubaren biologischen bzw. kompostierbaren natürlichen Polymeren vollständig ohne Schadstoffrückstände verrottet, da die Partikel aus Grauwacke ein Naturprodukt sind.

Ebenso gilt dies auch im Falle eines Recyclings. Hier kann das Grauwackemehl ausgespült werden. Im Falle eines thermischen Recyclings bleiben die Grauwackepartikel übrig, die dann wieder verwertet werden können.

Insgesamt ist ein Verbundwerkstoff geschaffen, der eine hohe Umweltverträglichkeit aufweist, denn der Verbundwerkstoff ermöglicht einen deutlich geringeren Einsatz von fossilen Rohstoffen bei gleichzeitig geringem bis keinem Einsatz zusätzlicher Chemie.

Zudem ist der Verbundwerkstoff universell einsetzbar, da er mit einer Vielzahl von Kunststoffen homogenisiert werden kann. Es ist ein mineralischer Füllstoff, der chemisch neutral und in Verbindung mit biologischen Kunststoffen vollumfänglich recyclebar ist. Das führt zu einer Vermeidung von Mikroplastik, einer Reduzierung der Abfallmenge sowie Verbesserung der CO₂- Bilanz.

Darüber hinaus werden Rohstoffe und Ressourcen geschont bzw. eingespart, weil ein bereits vorhandenes Abfallprodukt (weiter-)verarbeitet wird. Das spart Zeit, Strom und Material während der Verarbeitung. Zudem ist der Aufwand für den Transport bzw. die Einfuhr von Bausand reduziert, wodurch unter anderem Kraftstoffe wie Diesel oder Schweröl eingespart werden, da Grauwacke- Steinbrüche weltweit vorkommen. Zwar differiert die Zusammensetzung der jeweiligen Grauwacke; die positiven Eigenschaften stimmen jedoch überein, ebenso die vielen Vorteile, die sich aus der Nutzung des Verbundwerkstoffs ergeben.

Zu guter Letzt ist auch eine Verwendung des erfindungsgemäßen Verbundwerkstoffs als Material im 3D-Druck möglich. Aufgrund der Beimischung der Grauwacke wird eine geringere thermische Schwindung erreicht. Durch die höhere spezifische Wärmekapazität lässt sich eine bessere Layerhaftung durch den längeren Wärmeeintrag in die untere Druckschicht erreichen, wodurch sich ein stabileres Druckergebnis ergibt.

Bei der Herstellung des erfindungsgemäßen Verbundwerkstoffs wird zu Beginn der Kunststoff in Form von Granulat sowie die Steinpartikeln in Form von Grauwackepartikeln bzw. Grauwackemehl bereitgestellt. Die Grauwackepartikel werden dann dem Kunststoffgranulat, zugeführt und mit diesem vermischt. Die Mischung aus Grauwackepartikeln und Kunststoffgranulat wird dann soweit durchmischt, bis eine homogene Verteilung der beiden Komponenten erreicht ist. Dies erfolgt üblicherweise mit Hilfe eines Extruders, in dem das Gemisch gleichzeitig erwärmt bzw. geschmolzen wird. Das Gemisch wird dann gekühlt, granuliert und getrocknet. Im Anschluss wird es einer Spritzgießmaschine zugeführt und in eine Förderschnecke eingeführt. Es erfolgt dann die Verarbeitung des Verbundwerkstoffs in bekannter Weise.

Als besonders geeignet hat sich herausgestellt, wenn vor dem Mischen der beiden Komponenten das Kunststoffgranulat bspw. in einer Förderschnecke geschmolzen wird und dieser Schmelze dann Grauwackepartikel bzw. das Grauwackemehl beigemischt wird. Dieses kann zur Verbesserung der Eigenschaften vor dem Mischen auf eine Temperatur von bis zu 50°C unterhalb der Schmelztemperatur des Kunststoffs erwärmt werden. Das Gemisch wird dann einer Mischeinrichtung, bspw. einem Knet- oder Schermodul, zugeführt, um ein homogenes Gemisch zu erzielen. Dieses geschmolzene Gemisch wird dann unter Zufuhr von Wärme weiter gefördert und kann noch einer weiteren Mischeinrichtung zugeführt werden. Im Anschluss wird das Gemisch gekühlt, was bspw. durch Luft- und/oder Wasserkühler erfolgen kann. Das Gemisch wird dann granuliert. Hierzu wird die Schmelze bspw. zu einer Lochplatte gefördert und durch die Löcher gepresst sowie mit einem Schneidemesser in Granulat umgewandelt. Das Granulat wird dann gekühlt und getrocknet und zu üblichen Gebinden verpackt. Es kann dann zu Verarbeitungsmaschinen verbracht werden. Von dort wird das Gemisch dann in bekannter Weise z.B. einer Spritzgießmaschine oder einem formgebenden Extruder zugeführt und verarbeitet.

## Patentansprüche

1. Verbundwerkstoff auf Kunststoffbasis mit eingelagerten Steinpartikeln, **dadurch gekennzeichnet, dass** die Steinpartikel Grauwackepartikel sind und der Mengenanteil der Grauwackepartikel höchstens 72 Gewichts% beträgt.

2. Verbundwerkstoff nach Anspruch 1, **dadurch gekennzeichnet, dass** der Mengenanteil der Steinpartikel mindestens 1 Gewichts% beträgt.

3. Verbundwerkstoff nach Anspruch 1 oder 2, **dadurch gekennzeichnet, dass** die Grauwackepartikeln eine Korngröße von bis zu 1 mm aufweisen.

4. Verbundwerkstoff nach einem der vorgenannten Ansprüche, **dadurch gekennzeichnet, dass** der Kunststoff aus natürlichen, halbsynthetischen oder synthetischen Polymeren besteht.

5. Verbundwerkstoff nach einem der vorgenannten Ansprüche, **dadurch gekennzeichnet, dass** der Kunststoff ein thermoplastischer Kunststoff ist.

6. Verbundwerkstoff nach einem der vorgenannten Ansprüche, **dadurch gekennzeichnet, dass** der Kunststoff aus Polypropylen, Polyethylen, Acrylnitril-Butadien-Styrol, Poly-amid, Polyvinylchlorid, Polycarbonat, Polyetheretherketon, Polyethylenterephthalat, Polylactide oder Polystyrol gebildet ist.

7. Verbundwerkstoff einem der vorgenannten Ansprüche, **dadurch gekennzeichnet, dass** der Kunststoff eine Mischung aus Polypropylen und Acrylnitril-Butadien-Styrol ist.

8. Verbundwerkstoff nach einem der vorgenannten Ansprüche, **dadurch gekennzeichnet, dass** der Kunststoff ein biologischer Kunststoff ist.

9. Verbundwerkstoff nach einem der vorgenannten Ansprüche, **dadurch gekennzeichnet, dass** dem Kunststoff und den Grauwackepartikeln Haftvermittler oder Additive beigemischt sind.

10. Verbundwerkstoff nach einem der vorgenannten Ansprüche, **dadurch gekennzeichnet, dass** der Kunststoff und die Grauwackepartikel haftvermittlerlos miteinander verbunden sind.

11. Verfahren zur Herstellung eines Verbundwerkstoffs umfassend folgende Verfahrensschritte:
• Bereitstellen eines Kunststoffs in Form von Granulat
• Bereitstellen von Steinpartikeln in Form von Grauwackepartikeln
• Erwärmen des Kunststoffgranulats bis zur Schmelze · Zuführen der Grauwackepartikel zur Kunststoffschmelze
• Vermischen der Grauwackepartikel mit der Kunststoffschmelze
• Zuführen des erwärmten Gemischs zu einer Mischeinrichtung
• Abkühlen und Granulieren des Gemischs
• Verpacken des Gemischs zu Gebinden

12. Verfahren nach Anspruch 11, **dadurch gekennzeichnet, dass** die Grauwackepartikel vor dem Mischen mit dem Kunststoff auf eine Temperatur von bis zu 50°C unterhalb der Schmelztemperatur des Kunststoffgranulats erwärmt werden.

13. Produkt, hergestellt aus einem Verbundwerkstoff nach einem der Ansprüche 1 bis 10.
